# EUROPEAN PATENT APPLICATION

(11) **EP 4 167 350 A1**
(43) Date of publication of application: **19.04.2023**
(21) Application number: 21892397.7
(22) Date of filing: 15.11.2021
(51) Int. Cl.: H01M 10/6567, H01M 10/6551, H01M 10/6553, H01M 10/6556, H01M 10/613, H01M 10/625, H01M 50/20, H01M 50/502

(54) **BATTERY MODULE HAVING COOLING STRUCTURE USING INSULATING OIL, AND BATTERY PACK AND VEHICLE WHICH INCLUDE SAME**

(30) Priority: 16.11.2020 KR 20200153017
(71) Applicant: LG Energy Solution, Ltd., Seoul 07335 (KR)
(72) Inventor: JU, Eun-Ah, Daejeon 34122 (KR); YUN, Hyeon-Ki, Daejeon 34122 (KR); MUN, Jeong-O, Daejeon 34122 (KR); TANNENBERGER, Guenter, 85123 Pobenhausen (DE); JANKE, Jan, 74336 Brackenheim (DE); HARASZTOSI, Uwe, 74172 Neckarsulm (DE)
(74) Representative: Goddar, Heinz J.
(86) International application number: PCT/KR2021/016670
(87) International publication number: WO 2022/103230

(57) **Abstract**

A battery module according to an embodiment of the present disclosure includes: a sub-module including a cell stack assembly including a plurality of battery cells and a cooling fin located between adjacent battery cells, a front bus bar frame coupled to a side of the cell stack assembly in a longitudinal direction of the cell stack assembly, and a rear bus bar frame coupled to the other side of the cell stack assembly in the longitudinal direction of the cell stack assembly; a module housing including a main housing in which the sub-module is accommodated, a lower cover covering a lower opening portion of the main housing, and a upper cover covering an upper opening portion of the main housing; an insulating oil inlet passing through a side of the main housing in a longitudinal direction of the main housing and configured to supply insulating oil into a receiving space of the sub-module; and an insulating oil outlet passing through the other side of the main housing in the longitudinal direction of the main housing and configured to discharge outward the insulating oil from the receiving space of the sub-module.

## Description

### TECHNICAL FIELD

The present disclosure relates to a battery module having a cooling structure using insulating oil and a battery pack and a vehicle including the battery module, and more particularly, to a battery module having a structure in which insulating oil introduced into a module housing flows through a space between an edge of a battery cell and the module housing to cool battery cells, and a battery pack and a vehicle including the battery module.

The present application claims priority to Korean Patent Application No. 10-2020-0153017 filed on November 16, 2020 in the Republic of Korea, the disclosures of which are incorporated herein by reference.

### BACKGROUND ART

In the case of a battery module using an indirect water cooling method using cooling water, because cooling water does not directly contact a battery cell but indirectly contacts the battery cell through a module housing in which the battery cell is accommodated, there is a limit to its cooling performance. Also, because a cooling device such as a separate heat sink should be provided outside the module housing to form a passage for cooling, a volume of the battery module is inevitably increased, which may cause loss in terms of energy density.

In order to solve the problems of the indirect water cooling method, there is a need to develop a battery module having a cooling structure in which insulating oil for cooling may be directly introduced into a module housing and may directly contact a battery cell.

In the case of a battery module having a direct cooling structure using insulating oil, it is very important to secure a fluid passage structure for efficient cooling, and maintain airtightness so that insulating oil does not leak to the outside of a module housing.

### DISCLOSURE

### Technical Problem

The present disclosure is designed to solve the problems of the related art, and therefore the present disclosure is directed to securing a path so that insulating oil introduced into a module housing smoothly flows in a longitudinal direction of a battery module.

However, the technical purpose to be solved by the present disclosure is not limited to the above, and other objects not mentioned herein will be clearly understood by one of ordinary skill in the art from the following disclosure.

### Technical Solution

In one aspect of the present disclosure, there is provided a battery module including: a sub-module including a cell stack assembly including a plurality of battery cells and a cooling fin located between adjacent battery cells, a front bus bar frame coupled to a side of the cell stack assembly in a longitudinal direction of the cell stack assembly, and a rear bus bar frame coupled to the other side of the cell stack assembly in the longitudinal direction of the cell stack assembly; a module housing including a main housing in which the sub-module is accommodated, a lower cover covering a lower opening portion of the main housing, and an upper cover covering an upper opening portion of the main housing; an insulating oil inlet passing through a side of the main housing in a longitudinal direction of the main housing and configured to supply insulating oil into a receiving space of the sub-module; and an insulating oil outlet passing through the other side of the main housing in the longitudinal direction of the main housing and configured to discharge outward the insulating oil from the receiving space of the sub-module.

The cooling fin may include: a body contact portion located between adjacent battery cells; and a pair of edge cover portions bent at an upper end and a lower end of the body contact portion to cover edges of the battery cell.

An insulating oil passage for guiding a flow of the insulating oil may be formed between the upper cover and an edge of the battery cell, between the lower cover and an edge of the battery cell, and between an edge of the battery cell and the edge cover portion.

Insulating oil introduced through the insulating oil inlet into the module housing may pass through the front bus bar frame and may be introduced into the insulating oil passage.

The insulating oil passing through the insulating oil passage may pass through the rear bus bar frame and may be discharged to outside of the module housing through the insulating oil outlet.

The battery module may further include a pair of terminal assemblies electrically connected to the plurality of battery cells constituting the cell stack, a part of the pair of terminal assemblies being exposed to outside of the module housing through the upper cover.

Each of the pair of terminal assemblies may include: an internal terminal fixed to the front bus bar frame, and connected to an electrode lead of a battery cell located at an outermost position from among the battery cells provided in the cell stack assembly; a terminal spacer inserted by passing through the upper cover; and an external terminal connected to the internal terminal inside the module housing, and passing through the terminal spacer and exposed to outside of the module housing.

The upper cover may include: a spacer receiving groove into which the terminal spacer is inserted; and a spacer insertion hole passing through a bottom surface of the spacer receiving groove.

The terminal assembly may further include a pair of O-rings located between an edge of the terminal spacer and the bottom surface of the spacer receiving groove, and located in a space surrounded by the external terminal, an inner surface of a through-hole formed in the terminal spacer, and the internal terminal.

The battery module may further include: an upper binder crossing the upper cover in a width direction to bind the upper cover to the main housing; and a lower binder crossing the lower cover in a width direction to bind the lower cover to the main housing.

A gasket for sealing may be located at a fastening portion between the main housing and the upper cover and a fastening portion between the main housing and the lower cover.

In another aspect of the present disclosure, there are also provided a battery pack and a vehicle including the battery module.

### Advantageous Effects

According to an aspect of the present disclosure, insulating oil introduced into a module housing may smoothly flow in a longitudinal direction of a battery module. Also, according to an aspect of the present disclosure, insulating oil flowing inside a module housing may be effectively prevented from leaking to the outside of the module housing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating a battery module according to an embodiment of the present disclosure.
FIG. 2 is an exploded perspective view illustrating a battery module according to an embodiment of the present disclosure.
FIG. 3 is a cross-sectional view taken along line A-A' of FIG. 1.
FIGS. 4 and 5 are views illustrating a coupling relationship between a cooling fin and a battery cell according to the present disclosure.
FIG. 6 is a perspective view illustrating a cooling fin according to the present disclosure.
FIG. 7 is a view illustrating a sealing structure at a fastening portion between an upper cover and a main housing according to the present disclosure.
FIG. 8 is a view illustrating a sealing structure at a fastening portion between a lower cover and a main housing according to the present disclosure.
FIG. 9 is a cross-sectional view taken along line B-B' of FIG. 1.
FIG. 10 is a partial enlarged view of FIG. 9, illustrating a structure of a terminal assembly according to the present disclosure.
FIG. 11 is a view illustrating a battery module to which an upper binder and a lower binder are applied.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

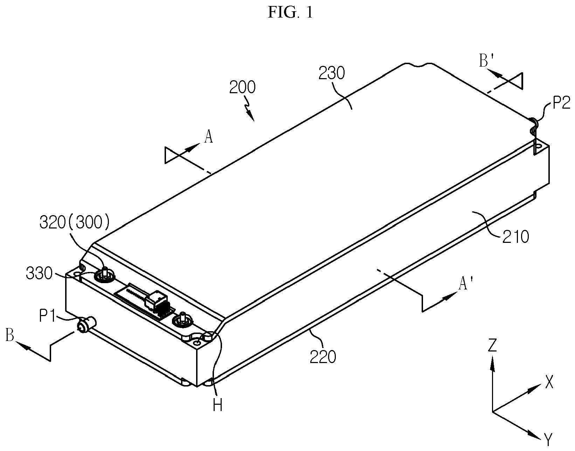

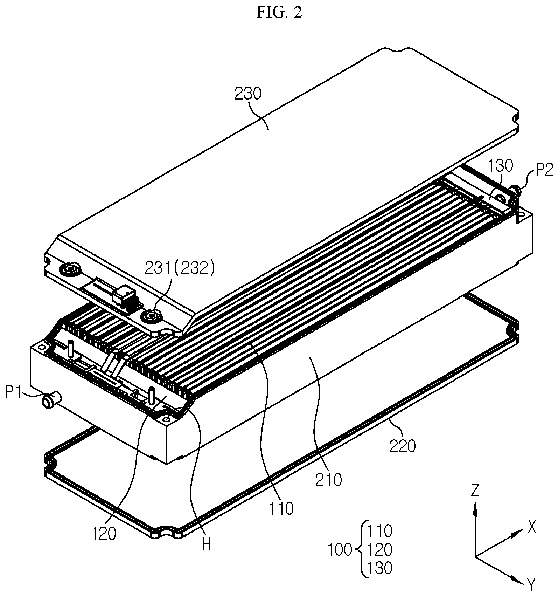

Referring to FIGS. 1 and 2, a battery module according to an embodiment of the present disclosure includes a sub-module 100 and a module housing 200, and may further include a terminal assembly 300.

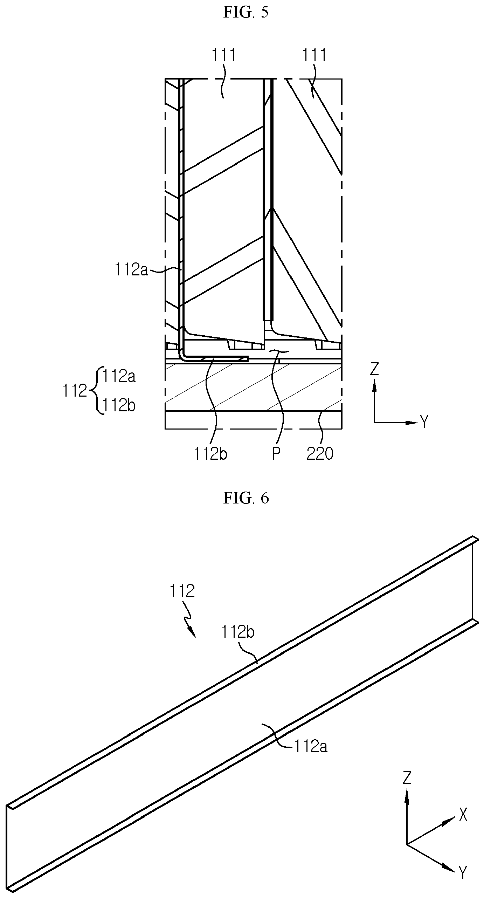

Referring to FIGS. 2 through 6, the sub-module 100 includes a cell stack assembly 110, a front bus bar frame 120, and a rear bus bar frame 130.

The cell stack assembly 110 includes a plurality of battery cells 111 and a plurality of cooling fins 112 located between adjacent battery cells 111, and may further include at least one buffer pad 113 located between adjacent battery cells 111. The battery cell 111, the cooling fin 112, and the buffer pad 113 are stacked upright in a direction perpendicular to the ground (surface parallel to an X-Y plane) to constitute one cell stack assembly 110.

The battery cell 111 may be a pouch-type battery cell including a pair of electrode leads 111a drawn out in opposite directions in a longitudinal direction (direction parallel to an X-axis).

The cooling fin 112 includes a body contact portion 112a located between adjacent battery cells 111 and a pair of edge cover portions 112b bent at an upper end and a lower end of the body contact portion 112a to cover edges of the battery cell 111. The edges of the battery cell 111 refer to both surfaces of a body of the battery cell 111 in a width direction, that is, in a height direction (direction parallel to a Z-axis) of the battery module.

The body contact portion 112a is located between bodies of a pair of adj acent battery cells 111 and directly contacts the bodies of the battery cells 111. The body contact portion 112a is configured to rapidly conduct heat generated from a body of the battery cell 111, that is, a region where an electrode assembly (not shown) is accommodated, in a width direction of the cooling fin 112, that is, the height direction (direction parallel to the Z-axis) of the battery module, toward the edge cover portion 112b. As such, the heat conducted toward the edge cover portion 112b moves in a longitudinal direction (direction parallel to the X-axis) of the battery module due to insulating oil flowing through an insulating oil passage P formed between an edge of the battery cell 111 and the edge cover portion 112b and is discharged to the outside of the battery module. The insulating oil passage P is formed between an edge of the battery cell 111 and the edge cover portion 112b, between an edge of the battery cell 111 and an upper cover 230 of the module housing 200, and between an edge of the battery cell 111 and a lower cover 220 of the module housing 200.

The edge cover portion 112b may not only form the insulating oil passage P as described above but also, when external impact is applied and the cell stack assembly 110 moves in a vertical direction (direction parallel to the Z-axis) in the module housing 200, may absorb the external impact. Also, the edge cover portion 112b may contact the lower cover 220 and the upper cover 230 of the module housing 200, so that heat generated by the battery cell 111 is discharged outward through the lower cover 220 and the upper cover 230.

The buffer pad 113 may be located between adjacent battery cells 111 and may absorb volume expansion according to swelling of the battery cell 111.

The front bus bar frame 120 and the rear bus bar frame 130 may be respectively coupled to a side and the other side of the cell stack assembly 110 in a longitudinal direction (direction parallel to the X-axis) of the cell stack assembly 110 to electrically connect the plurality of battery cells 111. For electrical connection between the battery cells 111, the front bus bar frame 120 and the rear bus bar frame 130 include a bus bar (not shown). The bus bar is coupled to the electrode leads 111a of adjacent battery cells 111 and electrically connects the adjacent battery cells 111.

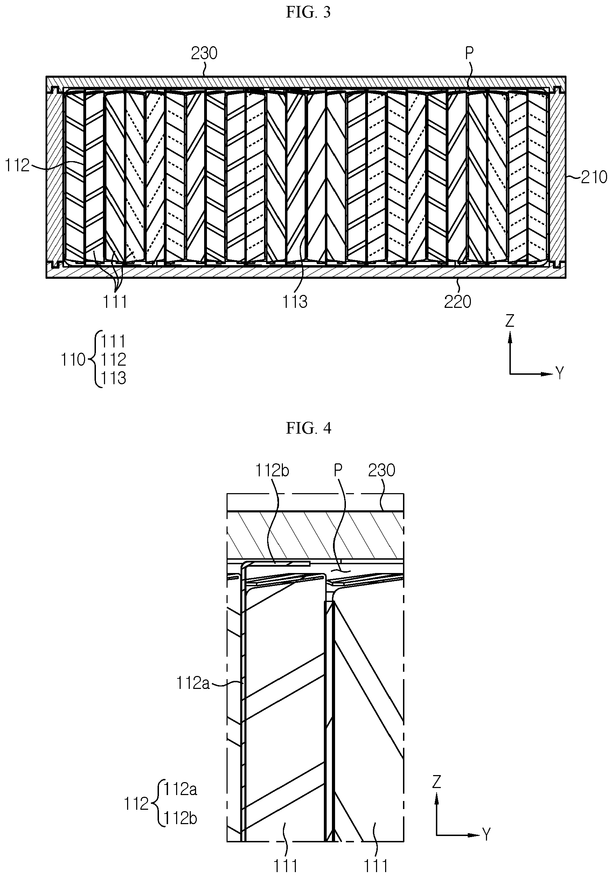

Referring to FIGS. 3 through 5, the insulating oil passage P is formed between the module housing 200 and an edge of the battery cell 111 and between the edge cover portion 112b of the cooling fin 112 and an edge of the battery cell 111. The insulating oil passage P guides the flow of insulating oil so that insulating oil supplied into the module housing 200 through an insulating oil inlet P1 moves in the longitudinal direction (direction parallel to the X-axis) of the battery module and is discharged through an insulating oil outlet P2.

As such, in order to cause insulating oil supplied into the module housing 200 to flow into the insulating oil passage P, space through which insulating oil may pass exists between the front bus bar frame 120 and an upper end and a lower end of the module housing 200. Likewise, in order to cause insulating oil moving from a side to the other side of the insulating oil passage P in a longitudinal direction (direction parallel to the X-axis) of the insulating oil passage P to pass through the rear bus bar frame 130 and move toward the insulating oil outlet P2, a space through which insulating oil may pass exists between the rear bar frame 130 and an upper end and a lower end of the module housing 200.

The module housing 200 includes a main housing 210 in which the sub-module 100 is accommodated, the lower cover 220 covering a lower opening portion of the main housing 210, and the upper cover 230 covering an upper opening portion of the main housing 210. The insulating oil inlet P1 is located on a side of the main housing 210 in a longitudinal direction (direction parallel to the X-axis) of the main housing 210.

The insulating oil inlet P1 passes through a front surface of the main housing 210, and thus, functions as a path through which insulating oil is supplied into the module housing 200 from the outside of the module housing 200. The insulating oil outlet P2 is provided on the other side of the main housing 210 in the longitudinal direction of the main housing 210. The insulating oil outlet P2 passes through a rear surface of the main housing 210, and thus, functions as a path through which insulating oil passing through the inside of the module housing 200 to cool the battery cells 111 is discharged to the outside of the module housing 200.

A fastening hole H passing through the battery module in the height direction (direction parallel to the Z-axis) of the battery module may be provided at a corner portion of the main housing 210. The fastening hole H may provide a space into which a fastening means such as a bolt may be inserted to fix at least one battery module according to the present embodiment in a pack housing to manufacture a battery pack according to the present disclosure. Also, the fastening hole H may provide an insertion space for a fastening bolt (not shown) when a battery pack with a higher voltage and/or higher capacity is to be formed by connecting a plurality of battery modules.

The upper cover 230 includes a spacer receiving groove 231 and a spacer insertion hole 232 for providing a space into which a terminal spacer 330 of the terminal assembly 300 described below may be inserted. The spacer receiving groove 231 is provided at a position where an external terminal 320 of the terminal assembly 300 is exposed, and the spacer receiving grooves 231 are provided on both sides of the upper cover 230 in a width direction (direction parallel to a Y-axis) of the upper cover 230. The spacer insertion hole 232 passes through a bottom surface of the spacer receiving groove 231.

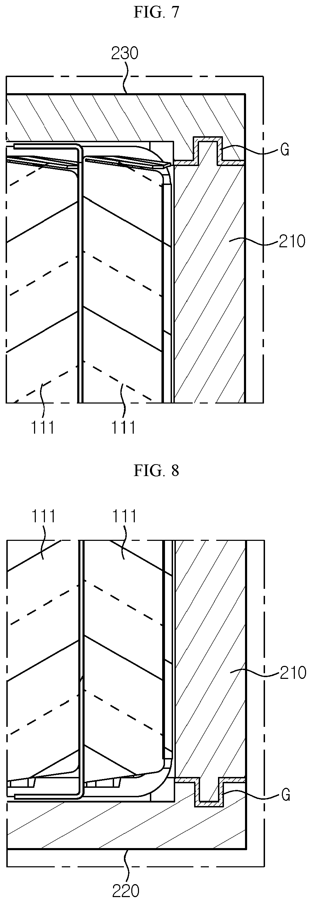

Referring to FIGS. 7 and 8, a gasket G may be located at a fastening portion between the main housing 210 and the upper cover 230 and a fastening portion between the main housing 210 and the lower cover 220. Also, a protrusion-groove fastening structure may be applied to the fastening portion between the main housing 210 and the upper cover 230 and the fastening portion between the main housing 210 and the lower cover 220. When the gasket G is additionally applied to the protrusion-groove fastening structure, the effect of preventing leakage of insulating oil may be maximized.

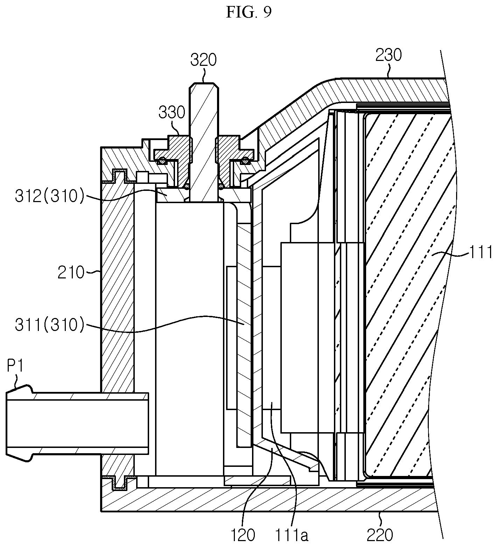

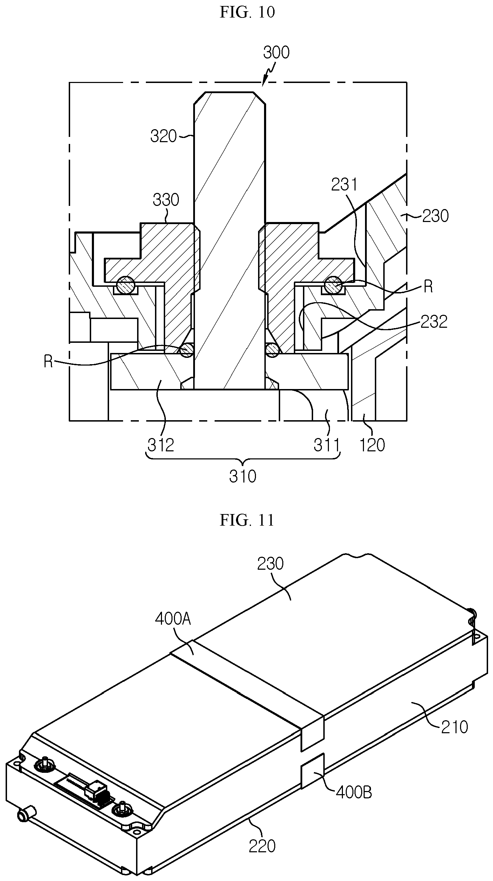

Referring to FIGS. 9 and 10, the terminal assembly 300 is electrically connected to the plurality of battery cells 111 constituting the cells tack assembly 110, and a part is exposed to the outside of the module housing 200 through the upper cover 230. The terminal assembly 300 includes an internal terminal 310, the external terminal 320, and the terminal spacer 330. The terminal assembly 300 may further include a pair of O-rings R to improve airtightness.

The internal terminal 310 is fixed to the front bus bar frame 120, and is connected to the electrode lead 111a of the battery cell 111 located at an outermost position from among the battery cells 111 provided in the cell stack assembly 110. That is, the terminal assembly 300 functions as a high-potential terminal of the battery module, and a pair of terminal assemblies 300 are provided and function as a positive electrode terminal and a negative electrode terminal. The internal terminal 310 includes an electrode lead fastening portion 311 fastened to the electrode lead 111a, and a terminal coupling portion 312 extending from an end portion of the electrode lead fastening portion 311 in a direction substantially perpendicular to the electrode lead fastening portion 311 and coupled to the external terminal 320.

A side of the external terminal 320 is coupled to the terminal coupling portion 312 of the internal terminal 310 inside the module housing 200, and the other side of the external terminal 320 passes through the terminal spacer 330 and is exposed to the outside of the module housing 200. The side of the external terminal 320 may be press-fitted to the internal terminal 310.

The terminal spacer 330 is inserted by passing through the upper cover 230. The terminal spacer 330 is inserted into the spacer insertion hole 232 formed in the upper cover 230, and an edge of the terminal spacer 330 is seated on a bottom surface of the spacer receiving groove 231.

A pair of O-rings R are located in a portion where airtightness may be weak in order to prevent leakage of insulating oil at a drawn-out portion of the external terminal 320. One of the pair of O-rings R is located between the edge of the terminal spacer 330 and the bottom surface of the spacer receiving groove 231. The other one of the pair of O-rings R is located in a space surrounded by the external terminal 320, an inner surface of a through-hole formed in the terminal spacer 330, and the internal terminal 310.

Due to the application of the pair of O-rings R, insulating oil may be prevented from leaking through a gap that may be formed when the external terminal 320 passes through the terminal spacer 330 and a gap that may be formed when the terminal spacer 330 passes through the upper cover 230.

Referring to FIG. 11, the battery module may further include an upper binder 400A and a lower binder 400B.

The upper binder 400A crosses the upper cover 230 in a width direction (direction parallel to the Y-axis) to bind the upper cover 230 to the main housing 210. Both end portions of the upper binder 400A in a longitudinal direction (direction parallel to the Y-axis) of the upper binder 400A may be welded to the main housing 210. The lower binder 400B crosses the lower cover 220 in a width direction (direction parallel to the Y-axis) to bind the lower cover 220 to the main housing 210. Both end portions of the lower binder 400B in a longitudinal direction (direction parallel to the Y-axis) of the lower binder 400B may be welded to the main housing 210.

The upper binder 400A and the lower binder 400B are located in a central portion of the module housing 200 in a longitudinal direction (direction parallel to the X-axis) of the module housing 200. Positions of the upper binder 400A and the lower binder 400B are positions for efficiently suppressing deformation of the module housing 200 due to swelling of the battery cell 111. Because deformation of the module housing 200 is minimized through efficient suppression of swelling, leakage of insulating oil due to a decrease in airtightness at a coupling portion between the main housing 210 and the lower cover 220 and a coupling portion between the main housing 210 and the upper cover 230 may be prevented.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

## Claims

1. A battery module comprising:
a sub-module comprising a cell stack assembly comprising a plurality of battery cells and a cooling fin located between adjacent battery cells, a front bus bar frame coupled to a side of the cell stack assembly in a longitudinal direction of the cell stack assembly, and a rear bus bar frame coupled to the other side of the cell stack assembly in the longitudinal direction of the cell stack assembly;
a module housing comprising a main housing in which the sub-module is accommodated, a lower cover covering a lower opening portion of the main housing, and an upper cover covering an upper opening portion of the main housing;
an insulating oil inlet passing through a side of the main housing in a longitudinal direction of the main housing and configured to supply insulating oil into a receiving space of the sub-module; and
an insulating oil outlet passing through the other side of the main housing in the longitudinal direction of the main housing and configured to discharge outward the insulating oil from the receiving space of the sub-module.

2. The battery module of claim 1, wherein the cooling fin comprises:
a body contact portion located between adjacent battery cells; and
a pair of edge cover portions bent at an upper end and a lower end of the body contact portion to cover edges of the battery cell.

3. The battery module of claim 2, wherein an insulating oil passage for guiding a flow of the insulating oil is formed between the upper cover and an edge of the battery cell, between the lower cover and an edge of the battery cell, and between an edge of the battery cell and the edge cover portion.

4. The battery module of claim 3, wherein insulating oil introduced through the insulating oil inlet into the module housing passes through the front bus bar frame and is introduced into the insulating oil passage.

5. The battery module of claim 4, wherein the insulating oil passing through the insulating oil passage passes through the rear bus bar frame and is discharged to outside of the module housing through the insulating oil outlet.

6. The battery module of claim 1, further comprising a pair of terminal assemblies electrically connected to the plurality of battery cells constituting the cell stack, a part of the pair of terminal assemblies being exposed to outside of the module housing through the upper cover.

7. The battery module of claim 6, wherein each of the pair of terminal assemblies comprises:
an internal terminal fixed to the front bus bar frame, and connected to an electrode lead of a battery cell located at an outermost position from among the battery cells provided in the cell stack assembly;
a terminal spacer inserted by passing through the upper cover; and
an external terminal connected to the internal terminal inside the module housing, and passing through the terminal spacer and exposed to outside of the module housing.

8. The battery module of claim 7, wherein the upper cover comprises:
a spacer receiving groove into which the terminal spacer is inserted; and
a spacer insertion hole passing through a bottom surface of the spacer receiving groove.

9. The battery module of claim 8, wherein the terminal assembly further comprises a pair of O-rings located between an edge of the terminal spacer and the bottom surface of the spacer receiving groove, and located in a space surrounded by the external terminal, an inner surface of a through-hole formed in the terminal spacer, and the internal terminal.

10. The battery module of claim 1, further comprising:
an upper binder crossing the upper cover in a width direction to bind the upper cover to the main housing; and
a lower binder crossing the lower cover in a width direction to bind the lower cover to the main housing.

11. The battery module of claim 1, wherein a gasket for sealing is located at a fastening portion between the main housing and the upper cover and a fastening portion between the main housing and the lower cover.

12. A battery pack comprising the battery module according to any one of claims 1 through 11.

13. A vehicle comprising the battery module according to any one of claims 1 through 11.
